# EUROPEAN PATENT APPLICATION

(11) **EP 1 349 062 A2**
(43) Date of publication of application: **01.10.2003**
(21) Application number: 03007059.3
(22) Date of filing: 27.03.2003
(51) Int. Cl.: G06F 9/445

(54) **Download management system**

(30) Priority: 28.03.2002 JP 2002093137; 17.02.2003 JP 2003037891
(71) Applicant: SEIKO EPSON CORPORATION, Shinjuku-ku, Tokyo 163-0811 (JP)
(72) Inventor: Kuroda, Naoto, Suwa-shi, Nagano-ken, 392-8502 (JP)
(74) Representative: Winter, Brandl, Fürniss, Hübner, Röss, Kaiser, Polte Partnerschaft

(57) **Abstract**

In a download management system of the present invention, when a request of access to a data file specified by a URL is sent directly to a server 10, the server 10 rejects the access to the specified data file. When the user selects a desired data file to be downloaded out of a file list 22 on a display of a terminal device 3, on the other hand, a browser 7 installed in the terminal device 3 sends a file number 17 and a download request command 18, which correspond to the selected desired data file, to the server 10. A download management module 12 of the server 10 retrieves a URL of a data file corresponding to the file number 17 and transmits the URL to the browser 7 of the terminal device 3. The results of downloading are recorded in a management data file 14. This arrangement ensures sufficient and effective download management, which data file is downloaded via a network to what computer under management.

## Description

### BACKGROUND OF THE INVENTION

### 1. Field of the Invention

The present invention relates to a download management system that manages download of data files into a client connected to a network.

### 2. Description of the Related Art

As a general procedure, data files required for a client computer connecting with a network are often downloaded via the network. For example, a system constructed in an intranet of a large-scale enterprise causes a management server to manage downloading data files (see JP 2001-243157A). This system provides a client with a menu window including a list of available data files as downloading objects, for example, in the form of a Web page. The user of the client clicks a desired data file on the menu window, so as to give a request of downloading the desired data file.

In the prior art system, the request of downloading the desired data file may be given by specifying the location of the data file, for example, in the form of a URL. When the client directly specifies the URL of the data file, the data file may be downloaded without an access to the management server. This leads to insufficient download management. The unspecified download destination causes failed collection of the due charge. There is also some possibility that the data file is downloaded illegally.

For establishment of the working environment of a certain application program, in some cases, multiple programs should be installed in a preset order. In the state of the insufficient download management, however, when some trouble arises in use of the application program, the management server can not check whether the multiple programs have been installed in the preset order. This causes the trouble to be solved after a long time or even not solved at all.

### SUMMARY OF THE INVENTION

The object of the present invention is thus to provide a download management system that manages download of data files to a client with high accuracy.

In order to attain at least part of the above and the other related objects, the present invention is directed to a download management system of a first arrangement that manages download of data files to a preset client connected to a network. The download management system provides the client with an interface window for downloading the data files. A user of the client transmits file specification information, which is used to specify an desired data file to be downloaded, to the download management system via the interface window. The file specification information is defined in a predetermined format excluding location information, such as an address or a URL, which represents the location of a data file on the network. The file specification information may be identification information intrinsically allocated to each data file by the download management system or the name of each data file. The download management system gives the client a permission of downloading the desired data file specified by the file specification information.

The download management system of the present invention desirably keeps the location of each data file on the network in secrecy from the client. This arrangement thus prevents the user of the client from downloading a desired data file by directly specifying the location of the data file and ensures the sufficient and effective download management.

The data file as a downloading object may be a program file. The data file may be kept originally in the download management system or may be provided by an external server, such as a Web server on the Internet. The network may be a relatively limited network like an intranet or a LAN or may otherwise be a wide area network like the Internet.

In one preferable application of the present invention, in response to input of the location information prior to the permission, the download management system prohibits an access to a data file specified by the location information. This application effectively prevents illegal download without using the download management system. It is preferable to set authentication of the client as a condition for permitting download. In order to ensure prohibition of access in the case of obtaining a data file from an external server, the download management system may be constructed as a proxy server or a gateway, which the client should go through in the process of gaining access to the external server.

A variety of methods may be applicable to give the permission of downloading. One available method stores the location information mapped to the file specification information, and sends the location information, which is mapped to the file specification information, to the client. This arrangement enables the client to download the desired data file based on the location information. The download management system may send a changeover instruction together with the location information to the client. The changeover instruction automatically changes the access of the client, based on the location information. One exemplified procedure transmits a URL to the client and redirects the access of the client to the URL.

The location information is not restricted to one piece with regard to each data file. In one preferable embodiment, multiple pieces of the location information with regard to each data file may be stored corresponding to multiple available places of connection of the client. The download management system obtains place specification information that is used to specify an actual place of connection of the client, and sends a piece of the location information, which corresponds to the place specification information, to the client. This arrangement ensures the selective use of the appropriate piece of the location information according to the actual place of connection of the client to the network. One concrete procedure transmits a piece of the location information, which corresponds to a server closest to the actual place of connection or a server that can utilize a broad communication line, to the client. This arrangement gives the favorable download environment.

A diversity of methods may be applicable to specify the actual place of connection of the client. For example, when the available address range is set in each division of an enterprise, as in the case of an intranet, one applicable method specifies the actual place of connection, based on the address information of the client. Another applicable method provides the client with an interface window and allows the user to report the actual place of connection via the interface window.

In another preferable application of the present invention, the download management system obtains the desired data file specified by the file specification information and transfers the desired data file itself to the client. This arrangement desirably keeps the location information of the data file in secrecy from the client, even after the client has received the permission of downloading.

In still another preferable application of the present invention, the interface window provided to the client includes a list of available data files that can be downloaded to the client. In this case, the contents of the list may be varied according to condition specification information, which is used to specify a download condition. The condition specification information may include at least part of information for specifying a place of connection of the client with the network, information for identifying the client or a user thereof, information for specifying a data file installed in the client, information for specifying an application program installed in the client, and information for identifying an operating system activated on the client. This arrangement enables a list of data files with the high necessity of downloading to be displayed in the interface window and thus enhances the convenience of the interface window.

When the information on the application program or the information on the operating system is used as the condition specification information, for example, the display of each patch program for a certain application program or operating system on the list is activated or inactivated, based on the condition specification information. This arrangement effectively prevents the user from mistakenly downloading and installing any inappropriate patch program. One typical example of the application program is a browser. When a Web page is used for transmission of information between the client and the download management system, the download management system can readily specify the browser used by the client. As for other application programs, an agent software program may be installed in the client to notify the download management system of installed application programs. Otherwise the installed application programs may be reported by the user via a predetermined interface window.

For example, in the case of a large-scale enterprise having multiple operation divisions, the client in each operation division may require different data files. In this case, the place of connection of the client is used as the condition specification information, and the contents of the list are varied according to the condition specification information. This provides the client with the interface window of good operation ability. The place of connection of the client to the network may be specified by an input of the user, a network address allocated to the client, or a route on which the client gains access to the download management system.

In accordance with another preferable application of the present invention, the download management system obtains identification information, which is used to identify either the client or a user thereof, in a downloading process, and stores each data file, for which downloading has been permitted, mapped to the identification information as a download record. The download record may be used for a diversity of purposes. For example, the download record is used to specify the order of downloading data files to the client. The download management system can thus readily determine whether or not multiple programs having a specified installation order are accurately installed.

A display including at least part of the download record may be additionally provided in the interface window. This arrangement enables the user to check the download record and thereby reduces the possibility of duplicated or insufficient download. Based on this download record, statistic data showing, for example, the downloading frequency of each data file may be output.

The present invention is also directed to another download management system having a second arrangement. The download management system has a downloading file storage module that stores in advance either a set of data files to be downloaded to the client or location information representing a location of each data file on the network. The download management system provides the client with an interface window, which shows contents of the respective data files and is used by the client to specify requirement or non-requirement of downloading. The download management system receives specification information, which is sent from the client via the interface window and represents either requirement or non-requirement of downloading. The download management system gives the client a permission of downloading the set of data files, in response to the specification information representing requirement of downloading.

In the download management system of the second arrangement, the set of data files to be downloaded are determined in advance, and the user does not select the desired data files. This arrangement also effectively keeps the location information of each data file in secrecy from the client and thus ensures the sufficient and effective data file management. The advantage of the second arrangement enables all the required data files to be downloaded without any omission to the client. The second arrangement is preferably applied to a process of downloading multiple programs having a specified installation order. This desirably prevents omission of any required program or installation of the multiple programs in any wrong order. The various applications discussed above with regard to the first arrangement are also applicable to the download management system of the second arrangement.

The download management system may not have all the functions of the various applications discussed above, but some of these functions may be omitted or combined according to the requirements. The present invention is not restricted to the download management system, but the principle of the present invention is also actualized by a download management method, a computer program that causes a server to manage download of data files, and a recording medium in which such a computer program is recorded.

Typical examples of the storage medium include flexible disks, CD-ROMs, magneto-optic discs, IC cards, ROM cartridges, punched cards, prints with barcodes or other codes printed thereon, internal storage devices (memories like a RAM and a ROM) and external storage devices of the computer, and a variety of other computer readable media.

The above and other objects, features, aspects, and advantages of the present invention will become more apparent from the following detailed description of the preferred embodiment with the accompanying drawings.

### BRIEF DESCRIPTION OF THE DRAWINGS

Fig. 1 schematically illustrates the construction of a download management system in one embodiment of the present invention;

Fig. 2 shows a window displayed by a browser;

Fig. 3 shows the data structure of an index file;

Fig. 4 shows the data structure of a management data file; and

Fig. 5 is a flowchart showing series of processing executed in the process of downloading a data file.

### DESCRIPTION OF THE PREFERRED EMBODIMENTS

One mode of carrying out the invention is discussed below as a preferred embodiment in the following sequence:
A. System Construction
B. Download Management
C. Modifications

### A. System Construction

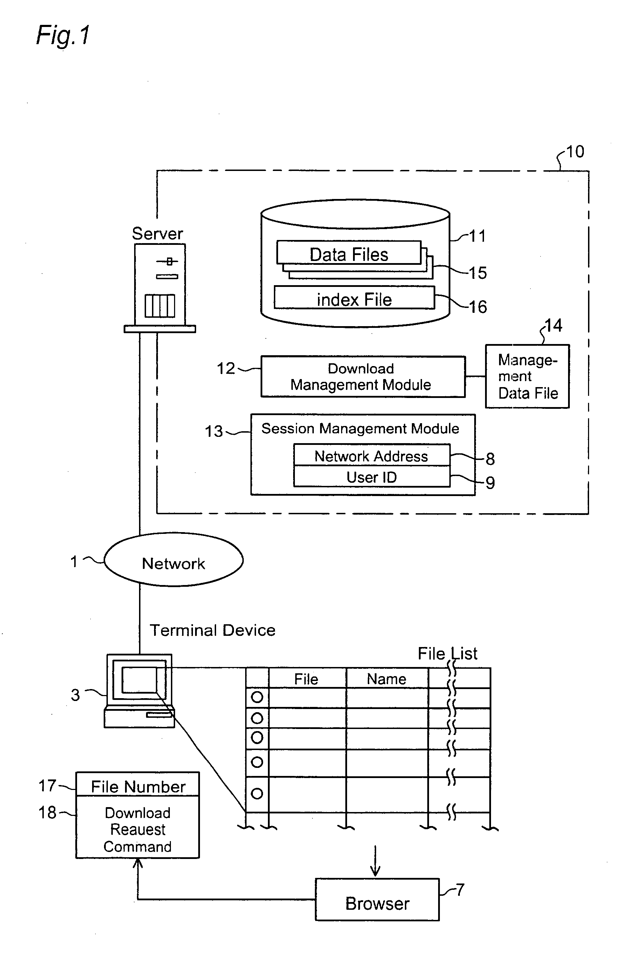

Fig. 1 schematically illustrates the construction of a download management system in one embodiment of the present invention. In the system of Fig. 1, a server 10 and a terminal device 3 as a client are connected to a network 1. A personal computer, a mobile computer, a PDA (personal digital assistance), or another portable terminal having the functions of network communication is applicable for the terminal device 3. The network 1 is an intranet in this embodiment, but may be a more restricted network like a LAN (local area network) or a wide area network like the Internet. The construction of Fig. 1 is only illustrative, and the numbers of servers and terminal devices are not restricted.

A browser 7 is installed in the terminal device 3. The browser 7 receives an HTML or another file from the server 10 and makes a file list appear on a display of the terminal device 3 as shown in Fig. 1. The user selects a desired data file to be downloaded out of the displayed file list with a pointing device or the like and thereby requests download of the selected desired data file from the server 10. The browser 7 generates a download request including a file number 17 and a download request command 18, based on the information included in the file list, and sends the download request to the server 10. The download request is defined in a predetermined format that excludes information directly representing the location of a data file, such as a URL.

The server 10 controls download of the desired data file requested from the terminal device 3. The server 10 has a storage device 11 to store an index file 16 and multiple data files 15 as downloading objects. A software program described in, for example, CGI (common gateway interface), is installed in the storage device 11 to actualize a download management module 12. The download management module 12 is the software configuration in this embodiment, but may be constructed by hardware.

The download management module 12 uses session management data 13, which includes a network address 8 mapped to a user ID 9, to manage the results of user authentication. The download management module 12 also controls download of desired data files 15 requested by the terminal device 3 in the following manner. When the terminal device 3 sends a request of access to a data file specified by a URL (uniform resource locator), the download management module 12 rejects the request of access to the specified data file. When the terminal device 3 sends a download request of a desired data file 15 using the file list shown in Fig. 1, on the other hand, the download management module 12 transmits the requested desired data file 15 to the terminal device 3. The download record of the data files 15 is managed by a management data file 14. The part surrounded by the one-dot chain line may be included in or separated from the main body of the server 10.

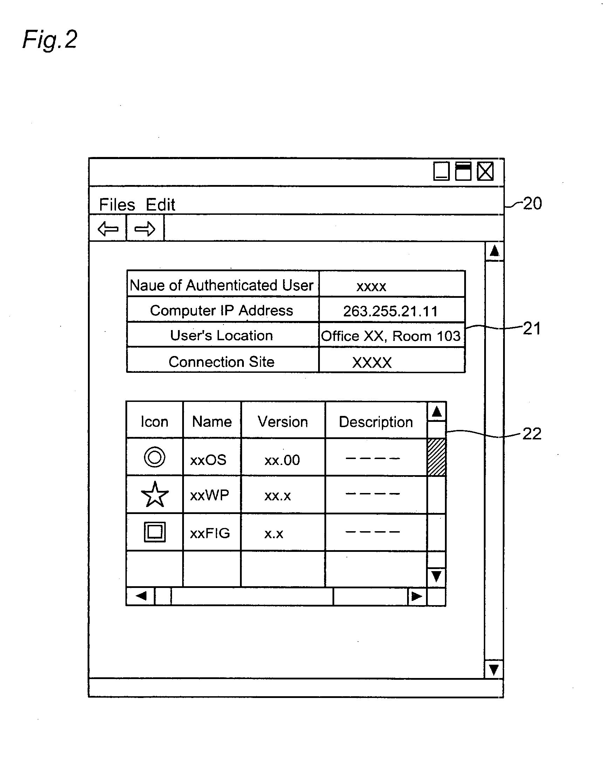

Fig. 2 shows a window 20 displayed by the browser 7. This displayed window 20 appears at the time of log-in of the terminal device 3 to the server 10. The displayed window 20 includes a connection status box 21 showing the result of user authentication and a file list 22.

The connection status box 21 includes the name of an authenticated user, the IP address of a computer used by the user, the user's current location, and the connection site. One possible modification may refer to the management data file 14 and display a download record in this connection status box 21. In this embodiment, the IP address is dynamically allocated by a DHCP server. The IP address may otherwise be allocated in advance by an administrator. The current location is determined, based on a sub-net to which the terminal device 3 is connected. The connection site represents the server 10 to which the terminal device 3 gains access, and is dynamically specified, based on the timing of connection and the sub-net to which the terminal device 3 is connected. For example, it is assumed that the server 10 is located in each office of a certain enterprise. When the user connects the terminal device 3 with the network 1 at one office, the server 10 located in the office is specified as the connection site. This arrangement ensures the favorable connection environment at every office. The contents of the display in the connection status box 21 may be set arbitrarily, and part of the items in the illustrated example may be omitted, if not necessary.

The file list 22 includes the icon, the name, the version, and the description of available data files as downloading objects. The user clicks a desired data file to give a request of downloading the desired data file to the server 10. In the structure of the embodiment, the contents of the data files displayed in the file list 22 are varied according to the connection site of the terminal device 3. For example, when the server 10 is located in each office of a certain enterprise, the server 10 allows for display of only the data files required for the office. This arrangement desirably simplifies the displayed contents of the file list 22 and effectively prevents non-required data files from being downloaded. One possible modification may display a file list excluding the data files that have already been downloaded to the client. Another possible modification may vary the contents of the file list 22 according to the operating system and the application program used in the client. Such modification desirably prevents inadequate data files, for example, data files unsuitable for the activated operating system, from being downloaded and installed.

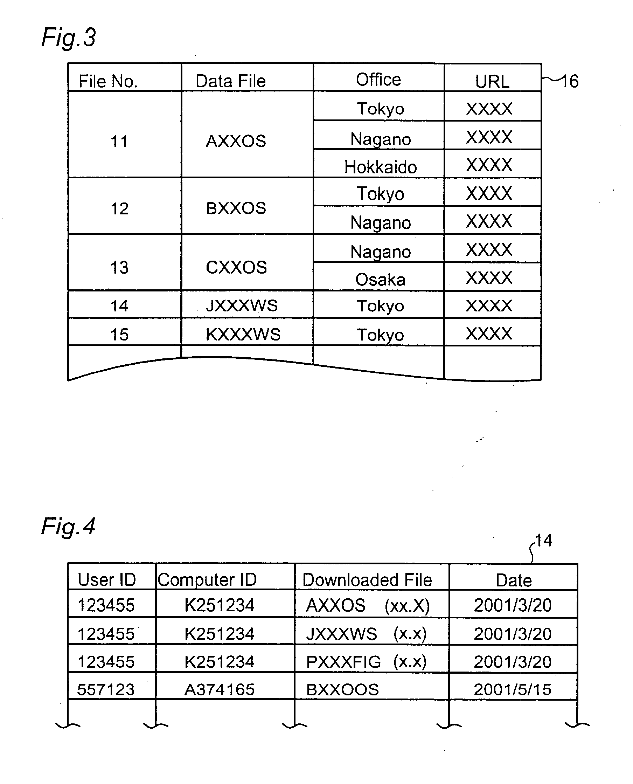

Fig. 3 shows the data structure of the index file 16. As described above, in this embodiment, each data file as the downloading object is identified by the file number. The index file 16 stores each file number mapped to one or multiple URLs representing actual locations of the data file. Different URLs are allocated to and registered for the respective offices. For example, with regard to the data file of the file No. 11, different URLs are allocated to and registered for the respective offices in Tokyo, Nagano, and Hokkaido. The offices with the registered URLs may be varied among the data files. In this embodiment, the name of each data file is included in the index file 16, for convenience of management of the index file 16. The name of each data file may, however, be omitted, if not required.

Fig. 4 shows the data structure of the management data file 14. The management data file 14 stores a download record for the purpose of management, that is, data specifying the name of each downloaded file, the time of downloading the file, and the terminal device as the download destination. In this embodiment, the management data file 14 stores the user ID, the computer ID used by the user, the name of each downloaded file, and the date of downloading the file. In one possible modification, the management data file 14 may store the version information of the downloaded file and any other suitable pieces of information.

### B. Download Management

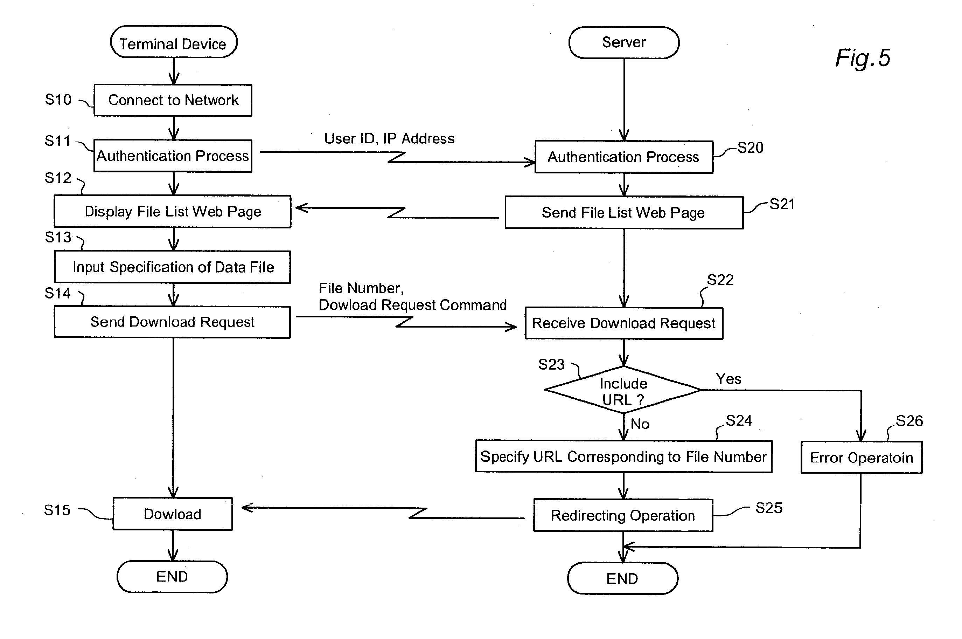

Fig. 5 is a flowchart showing series of processing executed in the process of downloading a data file. The left side shows a processing routine executed by the terminal device 3, and the right side shows a processing routine executed by the server 10.

When the user connects the terminal device 3 with the network 1 (step S10), the terminal device 3 starts an authentication process and transmits information required for authentication, for example, a user ID and an IP address (hereafter referred to authentication information), to the server 10 (step S11). The server 10 receives the authentication information transmitted from the terminal device 3, determines whether or not the connection is established by a valid user (authentication of the user), and records the result of the authentication as the session management data 13 (step S20). As described previously, the session management data 13 stores the IP address mapped to the user ID. A unique terminal ID allocated to the terminal device 3 may be included in the information transmitted from the terminal device 3 to the server 10 and the management object of the session management data 13.

On completion of the authentication process, the server 10 transmits a file used for displaying a file list Web page to the terminal device 3 (step S21). This file may be created in a markup language, such as HTML or XML. The terminal device 3 receives the file transmitted from the server 10 and uses the browser 7 to display the corresponding file list Web page (step S12). The file list Web page is the window 20 shown in Fig. 2 and includes the file list 22.

When the user clicks a selected icon in the file list 22 and specifies a desired data file to be downloaded, the terminal device 3 inputs the specification of the desired data file (step S13) and transmits a download request to the server 10 (step S14). The download request includes the file number 17 and the download request command 18 corresponding to the desired data file specified by the user.

A variety of methods may be applicable for generation of the download request corresponding to the icon clicked by the user. For example, the file list Web page may include a script for actualizing the generation of the download request. In another example, the download request may be generated by a program, such as CGI, running on the server 10.

The server 10 receives the download request transmitted from the terminal device 3 (step S22) and determines whether or not a URL is included in the received download request (step S23). When the download request includes a URL, the server 10 determines that the download request is illegal and executes an error operation to transmit an error message (step S26). When the download request does not include any URL, on the other hand, the server 10 determines that the download request is legal and executes an operation of downloading the desired data file to the terminal device 3 as discussed below.

The server 10 refers to the index file 16 and specifies the URL corresponding to the file number 17 included in the download request (step S24). According to the concrete procedure, the server 10 selects a URL to be transmitted, based on the place of connection of the terminal device 3. For example, the server 10 may provide a URL allocated to an office that is nearest to the place of connection. In another example, the server 10 may provide a URL allocated to an office that can utilize a broad line. One applicable procedure of step S24 takes into account a preset condition as discussed above and specifies the URL. Another applicable procedure sets the index file 16 to make the URL unequivocally specified according to the place of connection. After specification of the URL, the server 10 executes a redirecting operation to change the access of the terminal device 3 to the specified URL (step S25). The URL may represent the location of the desired data file in the storage device 11 of the server 10 or the location of the desired data file on another server. The terminal device 3 redirects the access and downloads the desired data file (step S15). The server 10 then records the result of downloading into the management data file 14.

In the structure of this embodiment, the terminal device 3 transmits a download request without a URL. This arrangement desirably allows the URL of each data file to be kept secret from the user and thus effectively prevents the data file from being illegally downloaded by direct specification of the URL. The server 10 of this embodiment rejects the download request including the URL. This further prevents illegal downloading.

The server 10 prohibits download of a data file by direct specification of the URL and thus efficiently manages the download to the terminal device 3. The server 10 stores a download record to accurately grasp the contents of the respective data files downloaded to the respective terminal devices and the order of downloading. In the case where any trouble arises at the time of installing a data file, the administrator of the server 10 may readily find an appropriate measure, based on such accurate information.

### C. Modifications

The above embodiment regards the case of downloading a data file to the terminal device 3 by the redirecting technique. Another available method, instead of the redirecting technique, causes the server 10 to obtain a data file and transfer the data file to the terminal device 3. This modified method more effectively keeps the URL of the data file in secrecy and enhances the reliability of download management.

In the structure of this embodiment, the data files 15 are stored in the storage device 11 of the server 10. The data files 15 may otherwise be stored in a Web server on the Internet. In this case, the use of the server 10 as a proxy server or a gateway is preferable, in order to prevent the terminal device 3 from directly gaining access to the external Web server.

In the structure of this embodiment, the desired data file to be downloaded is specified by the user. One modified arrangement may automatically specify a set of required data files. These specified data files may be downloaded in a predetermined order. The window displayed by the browser 7 includes buttons for determining requirement or non-requirement of download, in addition to the file list 22 of available data files as downloading objects shown in Fig. 2. The icons attached to the respective data files may be omitted or kept in an inactive state. The set of required data files can be downloaded by the simple user's operation of the buttons for determining requirement and non-requirement of download. The set of required data files may alternatively be downloaded by simple connection of the terminal device 3 with the network 1, without the user's determination of requirement or non-requirement of download.

The functional blocks shown in Fig. 1 may be attained by separate program modules or an integrated program module. All or part of these functional blocks may be actualized by the hardware structure including logic circuits. Each program module may be incorporated in an existing application program or may be designed as an independent program. Any of these computer programs may be recorded in a computer readable recording medium, such as a CD-ROM, and installed in a computer. Alternatively the computer program may be downloaded into a memory of a computer via a network.

The above embodiment is to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein.

The scope and spirit of the present invention are indicated by the appended claims, rather than by the foregoing description.

## Claims

1. A download management system that manages download of data files to a preset client connected to a network, said download management system comprising:
a window providing module that provides said client with an interface window for downloading the data files;
a request input module that receives, via the interface window, file specification information that is used to specify a desired data file to be downloaded and is defined in a predetermined format excluding location information, which represents location of a data file on the network; and
a download permission module that gives said client a permission of downloading the desired data file specified by the file specification information.

2. A download management system in accordance with claim 1, said download management system further comprising:
a prohibition module that, in response to input of the location information prior to the permission, prohibits an access to a data file specified by the location information.

3. A download management system in accordance with claim 1, said download management system further comprising:
a location information storage module that stores the location information mapped to the file specification information,
wherein said download permission module sends the location information, which is mapped to the file specification information, to said client.

4. A download management system in accordance with claim 3, wherein said location information storage module stores multiple pieces of the location information with regard to each of the data files, corresponding to multiple available places of connection of said client,
said request input module obtains place specification information that is used to specify an actual place of connection of said client, and
said download permission module sends a piece of the location information, which corresponds to the place specification information, to said client.

5. A download management system in accordance with claim 1, wherein said download permission module obtains the desired data file specified by said file specification information and transfers the desired data file to said client.

6. A download management system in accordance with claim 1, said download management system further comprising:
a condition specification information acquisition module that obtains at least part of information for specifying a place of connection of said client with the network, information for identifying said client or a user thereof, information for specifying a data file installed in said client, information for specifying an application program installed in said client, and information for identifying an operating system activated on said client, as condition specification information that is used to specify a download condition,
wherein the interface window includes a list of available data files that can be downloaded to said client, and
said window providing module changes the available data files included in the list according to the condition specification information.

7. A download management system in accordance with claim 1, said download management system further comprising:
an identification information acquisition module that obtains identification information, which is used to identify either of said client and a user thereof, in a downloading process; and
a record management module that stores each data file, for which downloading has been permitted, mapped to the identification information as a download record.

8. A download management system in accordance with claim 7, wherein said window providing module additionally provides a display including at least part of the download record in the interface window.

9. A download management system that manages download of data files to a preset client connected to a network, said download management system comprising:
a downloading file storage module that stores in advance either of a set of data files to be downloaded to said client and location information representing a location of each data file on the network;
a window providing module that provides said client with an interface window, which shows contents of the respective data files and is used by said client to specify requirement or non-requirement of downloading;
a request input module that receives specification information representing either requirement or non-requirement of downloading, via the interface window; and
a download permission module that gives said client a permission of downloading the set of data files, in response to the specification information representing requirement of downloading.

10. A download management method that causes a server connecting with a network to manages download of data files to a preset client connected with to the network,
wherein said server carrying out the steps of:
providing said client with an interface window for downloading the data files;
receiving via the interface window, file specification information that is used to specify an desired data file to be downloaded and is defined in a predetermined format excluding location information, which represents location of a data file on the network; and
giving said client a permission of downloading the desired data file specified by the file specification information.

11. A download management method that causes a server connecting with a network to manages download of data files to a preset client connected with to the network,
wherein said server carrying out the steps of:
storing in advance either of a set of data files to be downloaded to said client and location information representing a location of each data file on the network;
providing said client with an interface window, which shows contents of the respective data files and is used by said client to specify requirement or non-requirement of downloading;
receiving specification information representing either requirement or non-requirement of downloading, via the interface window; and
giving said client a permission of downloading the set of data files, in response to the specification information representing requirement of downloading.

12. A computer readable recording medium in which a computer program that causes a server connecting with a network to manages download of data files to a preset client connected with to the network is recorded,
said computer program causing said server to attain the functions of:
providing said client with an interface window for downloading the data files;
receiving via the interface window, file specification information that is used to specify an desired data file to be downloaded and is defined in a predetermined format excluding location information, which represents location of a data file on the network; and
giving said client a permission of downloading the desired data file specified by the file specification information.

13. A computer readable recording medium in which a computer program that causes a server connecting with a network to manages download of data files to a preset client connected with to the network is recorded,
said computer program causing said server to attain the functions of:
storing in advance either of a set of data files to be downloaded to said client and location information representing a location of each data file on the network;
providing said client with an interface window, which shows contents of the respective data files and is used by said client to specify requirement or non-requirement of downloading;
receiving specification information representing either requirement or non-requirement of downloading, via the interface window; and
giving said client a permission of downloading the set of data files, in response to the specification information representing requirement of downloading.
